# EUROPEAN PATENT APPLICATION

(11) **EP 3 614 107 A1**
(43) Date of publication of application: **26.02.2020**
(21) Application number: 19000380.6
(22) Date of filing: 20.08.2019
(51) Int. Cl.: G01D 5/14

(54) **LINEAR SENSOR**

(30) Priority: 20.08.2018 GB 201813551
(71) Applicant: Variohm-Eurosensor Limited, Towcester, Northamptonshire NN12 6HP (GB)
(72) Inventor: Kelley, Richard, Towcester, Northamptonshire NN12 6HP (GB)
(74) Representative: Franks & Co (South) Limited

(57) **Abstract**

A linear sensor (21) determines a (variable) distance separating two points, for example within a mechanism. A central spindle (1) is free to rotate about its longitudinal axis. In a preferred version, a Hall-effect sensor (6) detects the alignment of the magnetic field of a magnet (5) mounted to one end of the central spindle (1), and hence the rotational position of the central spindle (1). A hollow extension shaft (11) surrounds the central spindle (1) coaxially. A helical groove (7) extends along the central spindle (1) and a drive pin (14) extends from an inner surface of the shaft (11), engaging with the helical groove (7). Thus, linear motion of the extension shaft (11) along the central spindle (1) causes the spindle (1) to rotate. A tubular outer casing (22) encloses the central spindle (1) and the extension shaft (11), which can extend and contract telescopically in and out of the outer casing (22). Mountings (23, 24) at respective remote ends of the extension shaft (11) and the outer casing (22), allow the linear sensor (21) to be mounted between two points. Relative motion of these points causes the extension shaft (11) to move linearly in or out of the outer casing (22), the linear motion of the extension shaft (11) thus causing the central spindle (1) and attached magnet (5) to rotate. The angular position of the magnet (5) is detected by the Hall-effect sensor chip (6), and is converted to an instantaneous separation of the points between which the linear sensor (21) is mounted.

## Description

The present invention relates to a positional sensor device. More particularly, it relates to a linear sensor, to determine in real time a distance between relatively movable components of a mechanism.

Linear sensors are used to determine the relative position of movable components of a mechanism, and specifically to measure and indicate a straight-line distance between the components during the operation of the mechanism. A typical linear sensor comprises an elongate telescopically extendable device having a mounting element at each end. The linear sensor must thus contain means to determine how far its telescopic elements have extended or retracted at any point in their travel.

The current market standard is the potentiometric linear sensor. As in a conventional rheostat/potentiometer, there is an elongate wound wire resistor, with an electrical contact travelling linearly along it. An electrical circuit runs through the resistor and the travelling contact. The resistance of the circuit depends on the position of the contact along the resistor and hence the proportion of the resistor (i.e., of its electrical resistance) that is incorporated into the circuit. Thus, the current flowing in the circuit is related to the position of the contact along the resistor, and thus to the extension of the sensor.

The potentiometric sensor is adequate for many applications, but it has drawbacks. For example, it can be difficult to waterproof the telescoping structure. This is a problem, because of the effect of water on the electrical currents essential to its operation. Additionally, early models of the potentiometric linear sensor had inconveniently large cross-sections, although more recent models have more convenient, compact diameters.

It is hence an object of the present invention to provide an improved linear sensor which is as sensitive as possible, as accurate as possible, as compact as possible and which obviates the disadvantages of existing linear sensors.

According to the present invention, there is provided a linear sensor adapted to indicate a displacement of a body along a linear axis, comprising an elongate first element defining said linear axis, and a second element displaceable along the first element along said linear axis, with helically-symmetrical engagement means being provided extending between the first and second elements, such that linear displacement of the second element along the first element drives the first element to rotate about said linear axis, wherein said linear sensor further comprises means to detect a rotation angle, arranged to determine a rotational alignment of the first element about the linear axis.

In a preferred embodiment, said means to detect a rotation angle comprises magnet means mounted adjacent an end of the first element remote from the second element so as to rotate together with the first element, and Hall-effect detector means mounted non-rotatably adjacent the magnet means so as to detect an alignment of a magnetic field produced by the magnet means, and hence a rotational alignment of the first element.

Thus, an output signal produced by the Hall-effect detector means can be converted to a rotational alignment of the first element, and further to a linear disposition of the second element relative to the first element.

In an alternative embodiment, the means to detect a rotation angle comprises a non-rotatably mounted resistive track based element, with wiper means being mounted to an adjacent end of the first element so as to make electrical contact between two circular tracks of the resistive track based element, said contact being at a point depending on a rotational alignment of the first element.

In a further alternative embodiment, the means to detect a rotation angle comprises a non-rotatably mounted rotary potentiometer, directly operatively connected to the rotatable first element.

In any of the above embodiments, the linear sensor is provided with first mounting means adjacent the means to detect a rotation angle and second mounting means adjacent an end of the second element remote from the means to detect a rotation angle.

The linear sensor may thus be mounted by said mounting means to extend between two bodies moveable relative to each other, the relative motion of the bodies being indicated by the output signal of the means to detect a rotation angle.

Preferably, the first and second elements of the linear sensor are both elongate, and a longitudinal axis of each coincides with said linear axis.

Advantageously, one element of the first and second elements is hollow and encloses at least a portion of the other element of the first and second elements, which is solid.

Ideally, the second element comprises a hollow elongate body surrounding at least a portion of the first element, and being slideable along the linear axis, thereby varying the proportion of the first element that it surrounds.

In preferred embodiments, the helically-symmetrical engagement means comprises track means extending helically around and along one of the first and second elements, and follower means mounted to the other of the first and second elements, said follower means being constrained to follow the track means.

Advantageously, the track means comprises helical groove means.

The follower means may then comprise projection means extending from a respective first or second element into the groove means of the second or first element, respectively.

The groove means preferably extends around an outer surface of a solid first or second element and the projection means extends radially inwardly from an inner surface of a hollow second or first element, respectively.

Ideally, the element comprising the projection means comprises a terminally-located head element from which the projection extends.

Preferably, the linear sensor further comprises outer casing means.

Advantageously, said outer casing means comprises a hollow elongate tubular body enclosing the first element and at least a portion of the second element.

The first element may be so mounted to the outer casing means that it may undergo rotational motion but not translational motion.

The second element may be so mounted that it may undergo translational motion with respect to a remainder of the linear sensor, but not rotational motion with respect thereto.

The head means of the second element may then have an outer surface profile that engages with an inner surface profile of the outer casing means to prevent relative rotation but allows (longitudinal) translational motion.

The second element may thus extend from and retract into the outer casing means, telescopically.

Preferably, in the respective embodiments, the Hall-effect detector means is fixedly mounted within the outer casing means.

Advantageously, the linear sensor further comprises an integrated circuit chip, operatively connected to the Hall-effect detector means, and adapted to convert a rotational position of the magnet means indicated by the Hall-effect detector means into a linear position of the second element relative to the first element.

The integrated circuit chip may then convert said linear position into a linear distance between respective remote ends of the linear sensor.

The linear sensor may be provided with electrical cable means to provide power to the Hall-effect detector means and to the integrated circuit ship (when present) and to transfer data from the linear sensor to a further electronic control and/or data collection device.

The first and second mounting means may comprise pivotable mounting means.

The first and second mounting means may comprise ball and socket joint means.

An embodiment of the present invention will now be more particularly described by way of example and with reference to the accompanying drawings, in which:
**Figure 1A** is a lateral elevation of a central spindle and associated components of a device embodying the present invention;
**Figure 1B** is a cross-sectional elevation of the central spindle of Figure 1A, taken along the line B-B;
**Figure 2A** is a lateral elevation of the central spindle of Figure 1A engaged with an extension tube of a device embodying the present invention;
**Figure 2B** is a cross-sectional elevation of the central spindle and extension tube of Figure 2A, taken along the line B-B;
**Figure 3A** is a lateral elevation of a linear sensor device embodying the present invention; and
**Figure 3B** is a cross-sectional elevation of the devices of Figure 3A, taken in the plane of the page.

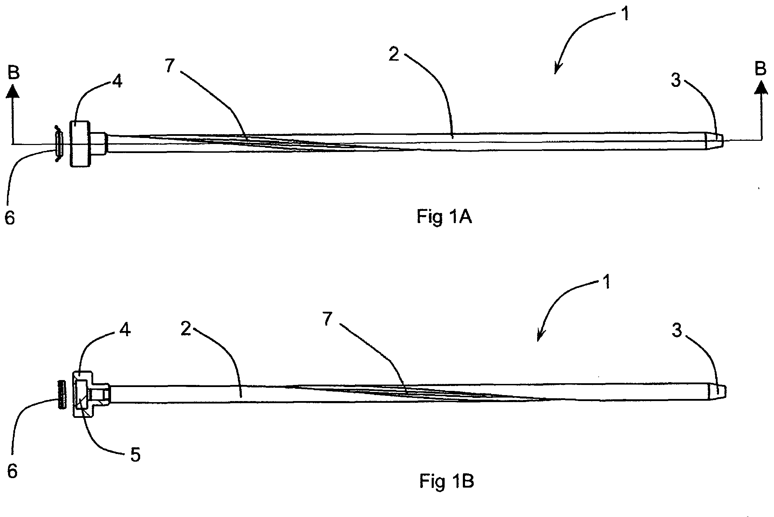

Referring now to the Figures, and to Figure 1A in particular, a central spindle 1 of a linear sensor device embodying the present invention is shown, isolated from the device, together with components of the device associated with the central spindle 1.

The central spindle 1 comprises a slender elongate cylindrical element 2, with a tapering terminal portion 3 at its distal end to aid assembly. A thick discoidal magnet housing 4 is mounted to a proximal end of the elongate cylindrical element 2, a longitudinal axis of the elongate cylindrical element 2 coinciding with a central axis of the discoidal magnet housing 4, such that they may rotate together about a common axis. A Hall-effect sensor chip 6 is located adjacent a proximal face of the magnet housing 4, on the same common axis but spaced out of physical contact with the magnet housing 4. A single helical groove 7 has been machined to extend around and along the elongate cylindrical element 2. In this example, the groove 7 extends for approximately an entire revolution around the elongate cylindrical element 2. In other examples, the groove 7 could extend for two or more revolutions, or for linear sensor devices measuring only short displacements, a groove 7 extending around only part of the circumference of the elongate cylindrical element 2 would be sufficient - for example, a linear sensor device having a "stroke" of 50mm could have a groove 7 extending through as little as 45° of the available 360°.

As shown in Figure 1B, the magnet housing 4 contains a magnet 5. The strength of the magnet 5 is sufficient that its magnetic field reaches the Hall-effect sensor chip 6 at a detectable strength, but it is not so strong as to interact with any ferromagnetic components of a mechanism to which the linear sensor will be mounted.

In broad terms, the Hall effect involves the interaction of a magnetic field with an electrical current. When an electrical current is flowing along a given line across a conductor, and a magnetic field is imposed perpendicularly to this line, the electrical current is deflected "sideways", i.e. at right angles both to its original direction of flow and to the magnetic field. A voltage applied across the conductor in the reverse direction to this deflection will urge the electrons of the current back on to the original line of current flow. The magnitude of the voltage that fully compensates for the effect of the magnetic field thus indicates the magnitude of the magnetic field (or at least the magnitude of the component of the magnetic field that is perpendicular to the current).

It is known to use the Hall effect to determine a rotational position of a magnet. This has been used in angular position sensors, where a magnet is directly connected to a rotatable body to be monitored. A Hall-effect sensor determines the alignment of the magnet, and this directly indicates the angle through which the body has rotated.

In the present invention, as shown in the example illustrated, the static Hall-effect sensor chip 6 thus interacts with the magnet 5 within the rotatable magnet housing 4, and if the central spindle 1 is rotated about its longitudinal axis, the Hall-effect sensor chip 6 can provide a real-time signal indicating the rotational position of the central spindle 1.

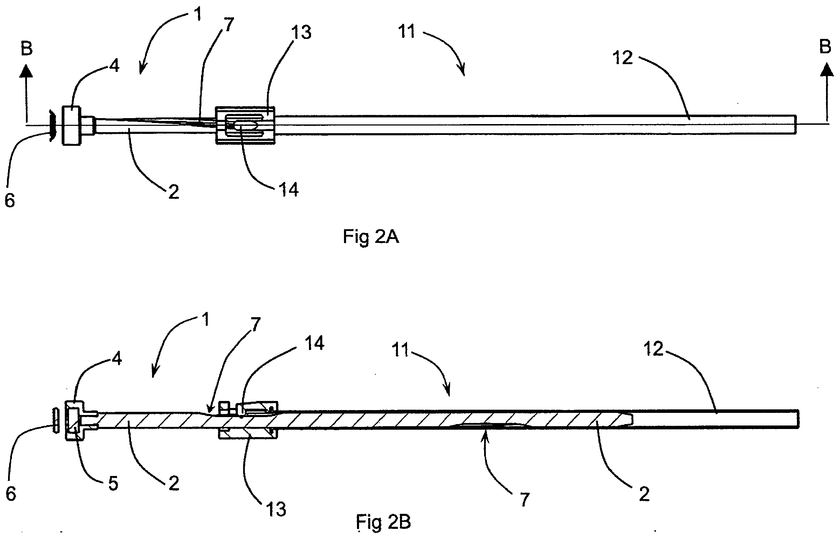

Referring now to Figures 2A and 2B, the central spindle 1 is shown enclosed by an extension shaft 11 of the linear sensor device. The extension shaft 11 comprises an elongate hollow tube 12 enclosing the elongate cylindrical element 2 of the central spindle 1 (see Figure 2B). The clearance between an outer surface of the cylindrical element 2 and an inner surface of the hollow tube 12 is sufficiently tight that the longitudinal axes of the cylindrical element 2 and the hollow tube 12 remain coincident, whatever the longitudinal position of the hollow tube 12 along the cylindrical element 2. However, this clearance is still sufficient for the hollow tube 12 to be moved freely relative to the cylindrical element 2.

A drive head 13 is mounted to an end of the hollow tube 12 closer to the magnet housing 4 of the central spindle 1. The drive head 13 is generally cylindrical, and is also coaxial with the hollow tube 12 and the cylindrical element 2 of the central spindle 1. The drive head 13 is provided with a drive pin 14, which extends radially inwardly therefrom. The drive pin 14 is dimensioned so that its tip extends engagingly into the groove 7 extending helically around and along the cylindrical element 2. The internal diameter of the drive head 13 is a close fit around the cylindrical element 2 so as to ensure that the central spindle 1 and the extension shaft 11 remain concentric.

The drive head 13, and indeed the extension shaft 11 as a whole, are constrained (as shown below) to travel linearly along the cylindrical element 2 without rotating relative to their surroundings. Thus, as the extension shaft 11 moves linearly along the cylindrical element 2, the drive pin 14 tip follows the helical groove 7, thus compelling the cylindrical element 2 and hence the central spindle 1 as a whole to rotate about its axis to keep the drive pin 14 in the groove 7.

Thus, linear movement of the extension shaft 12 relative to the central spindle 1 causes the central spindle 1 to rotate by a determinate amount, controlled by the pitch of the helical groove 7. This rotation of the central spindle 1 and its magnet 4 is detected and signalled by the stationary Hall-effect sensor chip 6.

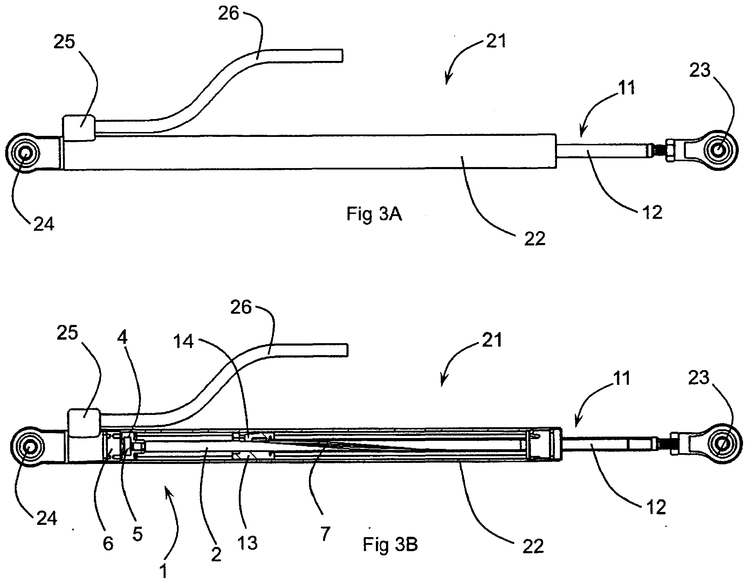

Figures 3A and 3B show a linear sensor 21 embodying the present invention in full. A hollow, tubular outer casing 22 encloses both the central spindle 1 and the extension shaft 11, a portion of the hollow tube 12 of the extension shaft 11 emerging telescopically from an end of the outer casing 21 remote from the Hall-effect sensor chip 6 and the magnet housing 4.

The Hall-effect sensor chip 6 is mounted fixedly within the outer casing 22, and the magnet housing 4 of the central spindle 1 is mounted within the outer casing 22 such that the central spindle 1 is free to rotate, but not to move linearly along the outer casing 22.

Meanwhile, the drive head 13 has an outer surface co-operably profiled with an inner surface of the outer casing 22, such that the drive head 13 (and hence the extension shaft 11 as a whole) is free to move linearly with respect to the outer casing 22, but cannot rotate relative to the outer casing 22 (and hence cannot rotate relative to the Hall-effect sensor chip 6). Alternatively, the drive head 13 and the hollow tube 12 are rotatably connected, such that only the drive head 13 and drive pin 14 cannot rotate relative to the outer casing 22, and the hollow tube 12 is free to rotate; the extension shaft 11 as a whole is still free to more linearly with respect to the outer casing 22.

Thus, the extension shaft 11 moves telescopically in and out of the outer casing 22, the drive pin 14 in the helical groove 7 forcing the central spindle 1 to rotate in place, its rotation being directly proportional to the linear motion of the extension shaft 11 relative to the outer casing 22.

To act as a linear sensor 21, it is fitted with a first mounting element 23 and a second mounting element 24, disposed at respective remote ends of the extension shaft 12 and the outer casing 22. The linear sensor 21 can thus be mounted to extend between two relatively movable bodies. The mounting elements 23, 24 are in this example pivotable mountings, such that the linear sensor 21 can be used with bodies that undergo a degree of transverse motion, as well as varying the linear distance between them. In other examples, the mounting elements 23, 24 may take other forms, such as ball-and-socket joints, depending on the overall transverse motions of the bodies to be accommodated.

As described above, a change in the linear separation of the bodies will result in the extension shaft 11 extending further from the outer casing 22 or retracting further into it. The central spindle 1 and its magnet 5 will thus be rotated by an angle determined by the linear movement of the extension shaft 11 (or more specifically, of the drive pin 14 of the drive head 13 along the helical groove 7). This angle is detected by the Hall-effect chip 6 and converted to a signal. In this particular embodiment, an integrated circuit chip 25 is provided, operatively connected to the Hall-effect sensor chip 6, to carry out the necessary conversion calculation and send out a signal indicating the linear separation of the mounting elements 23, 24. A multi-core cable 26 is provided to connect the integrated circuit chip 25 to a control module, data logger or other suitable piece of electronic equipment requiring this positional data. The cable 26 also provides the very low electrical currents needed to operate the Hall-effect sensor chip 6 and the integrated circuit chip 25.

It should be noted that since the integrated circuit chip 25 and the Hall-effect chip 6 are fixed relative to the outer casing 22, and do not form part of the telescopically extending mechanism of the linear sensor 21, it is very easy to seal them to prevent ingress of water to the electrical components of the sensor 21, unlike the situation with the conventional potentiometric linear sensor (see introduction/background).

It appears important to ensure that the helically-extending groove 7 has a relatively large pitch, much greater than the diameter of the cylindrical element 2, to optimise the mechanical advantage from the linear motion of the extension shaft 11 turning the cylindrical element 2.

In other examples (not specifically illustrated), other forms of detector arrangement may be used in place of the Hall-effect arrangement described above. For example, a resistive track based element comprises a pair of concentric circular tracks as the static component and a contact or "wiper" mounted to a rotating body (such as the central spindle 1 in the present case) as a moving body. The wiper contacts the two tracks, extending radially between them; as the rotating body rotates, the wiper follows the tracks, the point at which it bridges the tracks depending on the rotational angle of the rotating body. The rotational angle of the central spindle 1 can thus be determined and converted to a linear displacement of the extension shaft 11, as for the Hall-effect arrangement above.

Another approach would be to use a conventional rotary potentiometer. This has a static body bearing a tightly wound resistance coil arranged in a circle, with an electrical contact following this. The contact is connected to a rotatable shaft (i.e. in the present case to the end of the central spindle 1 in place of the magnet 5). Thus, rotation of the central spindle 1 moves the contact around the resistance coil, altering the proportion of the resistance coil (and so the resistance) in an electrical circuit. The current flowing in the circuit can thus be related to the rotational angle of the spindle 1, and in turn converted to a linear displacement of the extension shaft 11, as for the arrangements set out above.

The Hall-effect arrangement has the advantages of being non-contact and of being easier to seal to prevent ingress of water to electrical components. However, the arrangements with alternative rotational sensors described above are probably cheaper to produce, and are still easier to waterproof than existing linear sensors.

All of the linear sensors of the present invention are believed to be at least as accurate and responsive as existing linear sensors, and probably better, as well as being inherently safer and more durable.

## Claims

1. A linear sensor (21) adapted to indicate a displacement of a body along a linear axis, comprising:
an elongate first element (1) defining said linear axis and
a second element (11) displaceable along the first element (1), along said linear axis,
with helically-symmetrical engagement means (7, 14) being provided extending between said first (1) and second (11) elements, such that linear displacement of the second element (11) along the first element (1) drives the first element (1) to rotate about said linear axis,
wherein the linear sensor (21) further comprises means to detect a rotation angle,
arranged to determine a rotational alignment of the first element (1) about the linear axis,
**characterised in that**
said means to detect a rotation angle comprises:
magnet means (5), mounted adjacent an end of the first element (1) remote from the second element (11) so as to rotate together with the first element (1), and
Hall-effect detector means (6) mounted non-rotatably on said linear axis adjacent the magnet means (5) so as to detect an alignment of a magnetic field produced by the magnet means (5), and hence a rotational alignment of the first element (1).

2. A linear sensor (21) as claimed in Claim 1, **characterised in that** an output signal produced by the Hall-effect detector means (6) is converted to a rotational alignment of the first element (1), and further to a linear disposition of the second element (11) relative to the first element (1).

3. A linear sensor (21) as claimed in either Claim 1 or Claim 2, **characterised in that** the linear sensor (21) is provided with first mounting means (24) located adjacent the means to detect a rotation angle, and second mounting means (23) located adjacent an end of the second element (11) remote from the means to detect a rotation angle, by which the linear sensor (21) is mountable to extend between two bodies moveable relative to each other, the relative motion of the bodies being indicated by the output signal of the means to detect a rotation angle.

4. A linear sensor (21) as claimed in any one of the preceding claims, **characterised in that** the first (1) and second (11) elements of the linear sensor (21) are both elongate, and a longitudinal axis of each said element (1,11) coincides with said linear axis of the linear sensor (21).

5. A linear sensor (21) as claimed in any one of the preceding claims, **characterised in that** one element of the first (1) and second (11) elements is hollow and encloses at least a portion of the other element of the first (1) and second (11) elements, which is solid.

6. A linear sensor (21) as claimed in Claim 5, **characterised in that** the second element (11) comprises a hollow elongate body (12) surrounding at least a portion of the first element (1), and being slideable along the linear axis of the linear sensor (21), thereby varying the proportion of the first element (1) that the hollow elongate body (12) surrounds.

7. A linear sensor (21) as claimed in any one of the preceding claims, **characterised in that** the helically-symmetrical engagement means (7, 14) comprises track means (7) extending helically around and along one of the first (1) and second (11) elements, and follower means (14) mounted to the other of the first (1) and second (11) elements, said follower means (14) being constrained to follow the track means (7).

8. A linear sensor (21) as claimed in Claim 7, **characterised in that** the track means (7) comprises helical groove means (7), and the follower means (14) comprises a projection (14) extending from a respective first (1) or second (11) element into the groove means (7) of the second (11) or first (1) element, respectively.

9. A linear sensor (21) as claimed in Claim 8, **characterised in that** the groove means (7) extends around an outer surface of a solid first (1) or second (11) element and the projection (14) extends radially inwardly from an inner surface of a hollow second (11) or first (1) element, respectively.

10. A linear sensor (21) as claimed in Claim 9, **characterised in that** the element (1,11) comprising the projection (14) comprises a terminally-located head element (13) from which the projection (14) extends.

11. A linear sensor (21) as claimed in any one of the preceding claims, **characterised in that** the linear sensor (21) further comprises outer casing means (22) comprising a hollow elongate tubular body (22) enclosing the first element (1) and at least a portion of the second element (11).

12. A linear sensor (21) as claimed in Claim 11, **characterised in that** the first element (1) is so mounted to the outer casing means (22) that it may undergo rotational motion but not translational motion.

13. A linear sensor (21) as claimed in either Claim 11 or Claim 12, **characterised in that** the second element (11) is so mounted that it may undergo translational motion with respect to a remainder of the linear sensor (21), but not rotational motion with respect thereto, optionally with a head means (13) of the second element (11) having an outer surface profile that engages with an inner surface profile of the outer casing means (22) to prevent relative rotation but allowing (longitudinal) translational motion.

14. A linear sensor (21) as claimed in any one of Claims 11 to 13, **characterised in that** the second element (11) extends from and retracts into the outer casing means (22), telescopically.

15. A linear sensor (21) as claimed in Claim 1, **characterised in that** the linear sensor (21) further comprises an integrated circuit chip, operatively connected to the Hall-effect detector means (6), and adapted to convert a rotational position of the magnet means (5) indicated by the Hall-effect detector means (6) into a linear position of the second element (11) relative to the first element (1), optionally into a linear distance between respective remote ends of the linear sensor (21).
